# EUROPÄISCHE PATENTSCHRIFT

(11) **EP 2 976 548 B1**
(45) Veröffentlichungstag und Bekanntmachung des Hinweises auf die Patenterteilung: **03.05.2017**
(21) Anmeldenummer: 14711967.1
(22) Anmeldetag: 20.03.2014
(51) Int. Cl.: F16G 13/16, H02G 11/00

(54) **ENERGIEFÜHRUNGSKETTE INSBESONDERE FÜR REINRAUMANWENDUNGEN**
DRAG CHAIN, PARTICULARLY FOR CLEAN ROOM USES
CHAÎNE DE TRANSPORT D'ÉNERGIE DESTINÉE EN PARTICULIER À DES UTILISATIONS EN SALLE BLANCHE

(30) Priorität: 20.03.2013 DE 202013101203 U
(43) Veröffentlichungstag der Anmeldung: 27.01.2016
(73) Patentinhaber: Igus GmbH, 51147 Köln (DE)
(72) Erfinder: HERMEY, Andreas, 53773 Hennef (DE); BARTEN, Dominik, 53340 Meckenheim (DE)
(74) Vertreter: Lippert Stachow Patentanwälte Rechtsanwälte
(86) Internationale Anmeldenummer: PCT/EP2014/055639
(87) Internationale Veröffentlichungsnummer: WO 2014/147196

(56) Entgegenhaltungen:
- EP-A2- 1 152 510
- DE-C1- 19 910 128
- DE-U- 7 417 392
- JP-A- 2006 182 547
- JP-A- 2008 187 882

## Beschreibung

Die vorliegende Erfindung betrifft allgemein eine Energieführungskette zur Führung von Kabeln, Schläuchen oder dergleichen, umfassend eine Anzahl gelenkig miteinander verbundener Kettenglieder, von denen zumindest einige eine Aufnahme zur Durchführung der Kabel, Schläuche oder dergleichen aufweisen und wobei benachbarte Kettenglieder jeweils mittels geeigneter Gelenkverbindung so gegeneinander schwenkbar sind, dass zwischen einem feststehenden Anschluss und einem beweglichen Anschluss der Energieführungskette ein verfährbarer Umlenkbereich mit vorgegebener Krümmung gebildet wird. Die Erfindung betrifft insbesondere eine solche Energieführungskette, die speziell zum Einsatz in einem Reinraum oder einer Anwendung mit ähnlich hohen Anforderungen angepasst ist.

Gattungsgemäße Energieführungsketten führen und schützen die aufgenommenen Leitungen und stellen sicher, dass der kleinste zulässige Biegeradius dieser Leitungen eingehalten wird. Solche Energieführungsketten sind vielfältig bekannt, beispielsweise aus der EP0803032B1, der WO95/04231A1 oder der DE3531066A1. Die Gelenkverbindung benachbarter Kettenglieder ist hierbei durch Gelenkbolzen und korrespondierende Ausnehmungen gebildet. Derartige Energieführungsketten haben sich sehr bewährt, weisen jedoch den Nachteil auf, dass die Gelenkverbindungen aufgrund von Reibungskräften Verschleiß unterliegen und damit zwangsläufig Abrieb erzeugen. Das Freisetzen von Abriebpartikeln ist jedoch insbesondere in Reinraumanwendungen unerwünscht.

Unter anderem mit dem Ziel der Reduzierung von Abrieb wurden bereits Energieführungsketten vorgeschlagen, bei welchen die Gelenkverbindungen durch biegsame Gelenkelemente realisiert sind. Derartige Ketten sind beispielsweise aus der WO02/086349A1 oder der WO2012/131033A1 bekannt. Auf einem ähnlichen Prinzip beruhend und grundsätzlich ebenfalls für Reinraumanwendungen geeignet sind Ketten gemäß EP0789167A1, DE102006031907A1 oder DE102006060252A1. Derartige Ketten vermeiden weitestgehend das Entstehen von Abrieb, erfordern jedoch eine spezielle Gestaltung der Energieführungskette, welche meist mit höheren Kosten verbunden ist.

Weiterhin ist es bekannt, Energieführungsketten in weitestgehend geschlossenen Einhausungen oder Führungskanälen zu führen. Bekannt sind auch, beispielsweise aus DE3613431A1 oder DE202009005650U1, Energieführungsketten, bei welchen die Kettenglieder entlang der Schmalseiten der Seitenbereiche durch Deckplatten beidseitig verschlossen sind. Diese beiden Ansätze zielen jedoch darauf ab, die Energieführungskette und darin geführte Leitungen vor Schmutz, Staub und sonstigen Umgebungseinflüssen zu schützen. Grundsätzlich sind diese Lösungen nicht geeignet, ein Freisetzen von Abriebpartikeln von der Energieführungskette in die Umgebung zuverlässig zu minimieren oder zu verhindern.

Aus DE7417392U ist eine Energieführungskette aus Kunststoff bekannt, welche durch einen flexiblen Metallschlauch umgeben ist. Der Metallschlauch schützt die Energieführungskette und die darin befindlichen Leitungen vor Beschädigung von außen, insbesondere durch heiße Späne. Der Metallschlauch ist hierbei aus einzelnen Profilstücken zusammengesetzt, die ineinandergreifen. Auch diese Lösung verhindert das Freisetzen von Abriebpartikeln in die Umgebung nicht, sondern erzeugt durch Reibung der Profilstücke aneinander zusätzlichen Abrieb bzw. feinen Metallstaub.

Aus der DE102012100290A1 hingegen ist eine Leitungsführung bekannt, welche den Austritt von abriebbedingtem Feinstaub von z.B. den Kabeln oder dgl. nach außen verhindert. Hierbei sind kettenartig miteinander verbundene Stützglieder und die Leitungen nebeneinander in rohrförmigen Lagerabschnitten eines flexiblen Gurtelementes aus Kunstharz geführt. Das Gurtelement umgibt die Leitungen und die Stützgliederkette und ist endseitig staubdicht verschlossen, so dass Abriebstaub im Gurtelement gefangen bleibt. Diese Sonderlösung ist wiederum konstruktiv aufwändig und ermöglicht nicht die Verwendung einer bewährten Energieführungskette.

US 5,197,767 bzw. EP 0 197 546 A2 offenbaren eine Tragummantelung als Leitungsführung für Kabel, Schläuche oder dgl., die in der Längsrichtung aus einer Mehrzahl modularer Segmente zusammengesetzt ist. In einem Ausführungsbeispiel (vgl. Fig.21-27) weist diese Tragummantelung bzw. Umhüllung Merkmale des Oberbegriffs aus dem Anspruch 14 auf. Hierbei sind die Segmente jeweils aus biegesteifen Halbschalen hergestellt und haben ggf. besondere Dichtungen, z.B. gegen Wassereintritt. Diese Tragummantelung ist nicht speziell zur Kapselung gegen Austreten von abriebbedingtem Feinstaub gestaltet.

Eine Aufgabe der vorliegenden Erfindung ist es mithin, eine Energieführungskette vorzuschlagen, welche zuverlässig das Freisetzen von Abrieb reduziert oder gänzlich verhindern kann.

Diese Aufgabe wird gelöst durch eine Energieführungskette gemäß Anspruch 1, welche zugleich die Verwendung herkömmlicher Energieführungsketten in bewährter Bauart ermöglicht.

Die Aufgabe wird alternativ und unabhängig gelöst durch eine Umhüllung aus modularen Segmenten gemäß Anspruch 14.

In einer besonders einfachen Ausführung wird die vorstehende Aufgabe bei einer Energieführungskette gemäß Oberbegriff aus Anspruch 1 bereits dadurch gelöst, dass eine biegsame wellschlauchartige Umhüllung die Kettenglieder sowohl in Umfangsrichtung als auch zwischen beiden Anschlüssen durchgehend geschlossen umgibt. Hierbei ist die Umhüllung elastisch und so gestaltet, dass sie von zumindest einigen Kettengliedern getragen und mitgeführt wird und hinreichend flexibel ist, um die vorgegebene Krümmung im Umlenkbereich aufzunehmen und der Verfahrbewegung des Umlenkbereichs zu folgen.

Die Umhüllung ist schlauchartig ausgeführt und sollte durch geeignete Materialwahl und/oder Gestaltung der Verfahrbewegung der Kettenglieder einen möglichst geringen Widerstand entgegensetzen. Die erfindungsgemäße Umhüllung erstreckt sich geschlossen über eine Mehrzahl oder über alle Kettenglieder zwischen den Anschlüssen der Energieführungskette und wirkt somit als Kapselung bzw. Schutzhülle, welche das Austreten von freigesetzten Partikeln, etwa Abrieb der Kettenglieder, oder auch der Leitungen in die Umgebung auf einfache Weise vermeidet. Entsprechend wird eine weitestgehend hermetisch geschlossene Bauweise der Umhüllung vorgesehen. Zumindest ist die Umhüllung so dicht zu gestalten und zu verschließen, dass die überwiegende Mehrzahl kritischer Partikel nicht aus dem Bereich der Energieführungskette austreten kann, d.h. staubdicht zu gestalten. Das Material der Umhüllung sollte selbst möglichst abriebfest und elastisch gewählt sein.

Vorzugsweise wird die Gestalt der Umhüllung dem Querschnitt der Kettenglieder bereits bewährter Kettentypen angepasst.

In einer besonders bevorzugten Ausführung ist die Umhüllung in Längsrichtung zwischen beiden Anschlüssen durchgehend einstückig hergestellt, vorzugsweise aus Kunststoff. Bevorzugt ist ein Kunststoff, z.B. Polyamid ggf. mit einem geringen Anteil Zuschlagstoffen, welcher eine dünnwandige und dauerflexible aber schlag- und knickfest wellschlauchartige Umhüllung ermöglicht. Das Kunststoff soll insbesondere abriebfest, und vorzugsweise widerstandsfähig gegen chemische Medien und gegen Wärme bis mind. 80°C, vorzugsweise 120°C sein.

In einer anderen Ausführungsform ist vorgesehen, dass die Umhüllung in Längsrichtung aus einer Mehrzahl modularer Segmente zusammengesetzt ist, welche in Umfangsrichtung geschlossen miteinander verbunden sind. Alternativ zu Segmenten aus Halbschalen können einteilige in Umfangsrichtung vollumfänglich geschlossene Segmente vorgesehen sein, welche sich über die Länge mindestens eines, vorzugsweise mehrerer Kettenglieder erstrecken.

Vorteilhaft wird am feststehenden Anschluss und am beweglichen Anschluss der Energieführungskette jeweils ein Anschlussflansch zum staubdichten Abschluss der offenen Enden der Umhüllung vorgesehen.

In einer bevorzugten Ausführung ist jeder Anschlussflansch aus zwei staubdicht verbindbaren Klemmschalen zusammengesetzt, welche an einem vorderen Endbereich kraft- und/oder formschlüssig die Umhüllung halten bzw. in Längsrichtung sichern und diese staubdicht umgeben. Ferner weisen die Klemmschalen vorzugsweise Befestigungsmittel zur Befestigung auf, insbesondere ein passendes Lochschema zur Schraubverbindung mit Anschlusselementen der Energieführungskette. Auf diese Weise kann die Befestigung der Energieführungskette und deren staubdichter Abschluss mit wenigen Teilen, insbesondere mit Klemmschalen in Form von Spritzgussformteilen realisiert werden. Hierbei ist es vorteilhaft, wenn jeder Anschlussflansch an einem hinteren Endbereich eine Durchführdichtung umfasst zur staubdichten Durchführung der Kabel, Schläuche oder dergleichen. Geeignet sind hierzu z.B. Blöcke aus Kunststoff wie z.B. Polyurethan oder aus Neopren, welche mit einem Lochschema entsprechend der Anzahl und dem Querschnitt der geführten Leitungen versehen sind. Die Durchführdichtung kann so wahlweise angepasst werden. Vorzugsweise wird die Durchführdichtung durch die Befestigung der Klemmschalen an die Leitungen gepresst durch Einklemmen zwischen den Klemmschalen.

In einer alternativen Ausführungsform der Erfindung ist gemäß Anspruch 14 zur Kapselung gegen Austreten von Abrieb vorgesehen, dass die Umhüllung in Längsrichtung aus einer Mehrzahl modularer Segmente zusammengesetzt ist, wobei die Segmente jeweils in Umfangsrichtung geschlossen miteinander verbunden werden. Die Segmente gestatten eine wahlweise Kürzung oder Verlängerung der Leitungsführung, erleichtern den Zugriff, z.B. auf Kettenglieder und/oder die Leitungen, und vereinfachen den Aufbau. Hierbei umfassen zumindest einige dieser modularen Segmente jeweils eine erste und eine zweite Halbschale, aus einem elastischen und flexiblen Material, um die vorgegebene Krümmung im Umlenkbereich anzunehmen.

Auftrennbare Halbschalen ermöglichen einen noch leichteren Zugriff auf die Kettenglieder und/oder auf die geführten Leitungen, beispielsweise zu Wartungs- oder Reparaturzwecken. Bei aus Halbschalen zusammengesetzten Segmenten sind die Halbschalen vorzugsweise so ausgeführt, dass diese mit Längsfugen auf Höhe der neutralen Faserschicht der Energieführungskette geschlossen verbunden werden können. Hierdurch wird die Tendenz der Spaltbildung bzw. des Aufklaffens zwischen den Halbschalen im Umlenkbereich minimiert.

Zur Reduzierung der Bauteilanzahl sind die verwendeten Halbschalen vorzugsweise identisch ausgeführt und mit spiegelsymmetrisch angeordneten mechanischen Verbindern versehen, um zwei Halbschalen miteinander zu verbinden. So können die Halbschalen beispielsweise analog zu Kettengliedern aus Kunststoff im Spritzgussverfahren hergestellt werden. Geeignete mechanische Verbinder sind beispielsweise Schnapp-, Rast- und/oder Klemmverbinder und dergleichen, oder jegliche Verbinder die dazu beitragen, dass zusammengesetzte Halbschalen einen Abschnitt der Leitungsführung, z.B. über ein oder mehrere Kettenglieder, in Umfangsrichtung geschlossen umgeben.

Bevorzugt ist weiterhin vorgesehen, dass die Halbschalen im Bereich der Längsfugen, insbesondere beidseitig entlang der neutralen Faserschicht, Vorsprünge aufweisen, welche mittels zusätzlicher Klemmleisten gesichert werden können. Hierdurch kann sichergestellt werden, dass die Halbschalen auch bei gekrümmtem Zustand bzw. im Umlenkbereich nicht auseinander klaffen. Zweckmäßig ist demnach auch die Verwendung von Klemmleisten aus biegsamen bzw. flexiblen Kunststoffmaterial, welches die Krümmung des Umlenkbereichs annimmt. Zweckmäßig kann weiterhin zur Seite der Längsfuge an jeder Halbschale eine Verzahnung vorgesehen werden, welche in eine entsprechende Verzahnung der gegenüberliegenden Halbschale eingreift und so gegen ein Verschieben in Längsrichtung sichert.

In der alternativen Ausführung ist vorgesehen, dass benachbarte, Segmente der Umhüllung anhand von zusätzlichen Verbindungsteilen jeweils an ihren Stirnseiten miteinander und in Umfangsrichtung geschlossen verbunden sind. Vorzugsweise sind die gegenüberliegenden Stirnseiten der Segmente hierbei so ausgeführt, dass diese entweder formschlüssig ineinander greifen oder form- und/oder kraftschlüssig mit einem zwischengeordneten Verbindungsteil geschlossen verbunden werden können. Bei formschlüssigem Ineinandergreifen kann ein umlaufendes, zusätzliches Verbindungsteil, beispielsweise in Form einer Spannschelle vorgesehen sein, um die ineinandergreifenden Segmente in Umfangs- und Längsrichtung aneinander zu sichern.

Zur Verbindung einzelner Segmente der Umhüllung miteinander und/oder zur Halterung der Umhüllung an einzelnen Kettengliedern können rahmenartige Halterungen als Verbindungsteile vorgesehen werden. Diese können insbesondere in Umfangsrichtung ein jeweiliges Kettenglied zur Verbindung mit den Segmenten umrahmen. Derartige Halterungen können als separate Bauteile z.B. an den Querstegen einzelner Kettenglieder angebracht werden, oder aber bei entsprechender Gestaltung selbst die Querstege zwischen den Seitenbereichen bilden. Erstgenannte Ausführung vermeidet eine Abweichung von bisherigen Bauformen, wogegen letztgenannte Ausführung, den Zusammenbau der Leitungsführung vereinfacht.

Wie bereits eingangs erwähnt, ist vorteilhaft vorgesehen, dass die Umhüllung eine Energieführungskette geschlossen umgibt und zudem in ihrem Querschnitt an die Kettenglieder angepasst ist. So umgibt die Umhüllung die Kettenglieder sowohl in Umfangsrichtung als auch in Längsrichtung mit geringem oder technisch minimalem Spiel bzw. schmiegt sich an die Außenkontur der Kettenglieder an. Hierdurch wird unnötiger Verschleiß sowie erhöhte Geräuschentwicklung durch Schlackern der Umhüllung vermieden. Zudem wird ein Mitführen der Umhüllung durch die Kettenglieder auf einfache Weise erzielt.

Zur Anpassung an den Querschnitt der Kettenglieder und zugleich kostengünstigen Ausführung sieht eine besonders bevorzugte Ausführung vor, dass die wellschlauchartige Umhüllung einen im Wesentlichen ovalen, elliptischen oder gerundet rechteckigen Querschnitt quer zur Längsrichtung aufweist.

Ein Wellschlauch bzw. Wellrohr ist ein biegsamer Schlauch mit im Längsverlauf wellenförmig wechselndem Durchmesser. Vorzugsweise hat die Breite des ovalen, elliptischen oder langlochartigen Querschnitts außen gemessen mindestens den eineinhalbfachen, vorzugsweise mindestens den doppelten Betrag der Höhe, um für herkömmliche Ketten eine günstige Dimensionierung des nutzbaren Innenraums des Wellschlauchs zu erzielen.

Besonders bevorzugt wird die Umhüllung als Wellrohr ausgeführt mit einer periodischen Wellenlänge, d.h. einem Abstand zwischen benachbarten Wellentälern bzw. Wellenbergen der Wellform, welche mindestens das doppelte der Teilung der Gliederkette aus den verbundenen Kettengliedern beträgt. Die Teilung entspricht dem Abstand zwischen den benachbarten Schwenkachsen bzw. bei einer Gliederkette mit elastisch biegsamen Gelenkelementen dem periodischen Mittenabstand von zwei aufeinander folgenden Gelenkelementen.

Die Kombination aus einer wellschlauchartigen Umhüllung mit einer Gliederkette in welcher benachbarte Kettenglieder jeweils mittels einer Gelenkverbindung aus mindestens einem elastisch biegsamen Gelenkelement gegeneinander schwenkbar sind, z.B. gemäß WO 02/086349A1 oder WO 2012/131033A1, hat sich in Versuchen als überraschend vorteilhaft erwiesen.

Um auch am Übergang im Bereich des stationären bzw. beweglichen Endes der Energieführungskette ein Freisetzen von Abriebpartikeln zu verhindern, sind vorzugsweise sowohl am feststehenden Anschluss als auch am beweglichen Anschluss der Energieführungskette jeweils ein Anschlussflansch zum hermetischen Abschluss der offenen Enden der Umhüllung vorgesehen. Diese Anschlussflansche können Anschlusselemente für die Kettenglieder umfassen, diese aufnehmen oder zugleich solche Anschlusselemente bilden.

Die vorgeschlagene Lösung eignet sich speziell, aber nicht ausschließlich, zur Verwendung von Kettengliedern, welche durch Querstege verbundene gegenüberliegende Seitenbereiche aufweisen, deren Zwischenraum die Aufnahme zur Durchführung der Leitungen bildet.

Insbesondere wird man beachten, dass nunmehr auch herkömmliche Energieführungsketten mit Gelenkbolzen/Ausnehmung-Gelenkverbindung für Reinraumanwendungen eingesetzt werden können.

Grundsätzlich könnten herkömmliche Wellschläuche in geeigneter Dimensionierung und gegebenenfalls mit angepasstem Querschnitt als kostengünstige Umhüllung eingesetzt werden. Hierbei ist, wie oben erwähnt, eine Unterteilung in Segmente meist nicht zwingend erforderlich, d.h. der Wellschlauch kann zwischen beiden Anschlüssen ununterbrochen bzw. einstückig ausgeführt sein. Diese Ausführung hat sich in Versuchen als für viele Anwendungsfälle besonders gut geeignet herausgestellt.

Hierbei ist bevorzugt vorgesehen, dass das Kettenglied quer zu seiner Längsrichtung, insbesondere im mittleren Bereich bezogen auf die Längsrichtung, einen gerundeten Querschnitt aufweist, welcher an einen entsprechenden Querschnitt einer Umhüllung angepasst ist. Diese ovale, elliptische oder kreisrunde Kontur kann durch entsprechende Gestaltung der Seitenbereiche, welche meist als separate Seitenlaschen ausgeführt sind, und ggf. auch der diese verbindenden Querstege erzielt werden. Auch eine entsprechende einstückige Herstellung des gesamten Kettenglieds kann je nach Anwendung zweckmäßig sein.

Neben einem solchen Kettenglied betrifft die Erfindung schließlich auch ein modulares Segment zur Herstellung einer an bekannte Kettenglieder angepassten Umhüllung, welches eines oder mehrere der vorstehend erläuterten auf das Segment bezogenen Merkmale aufweist.

Schließlich bleibt anzumerken, dass eine erfindungsgemäß gestaltete Energieführungskette nicht nur kostengünstig und zuverlässig die Umgebung gegen Abriebpartikel von den Kettenbestandteilen oder den geführten Leitungen schütz, sondern im Umkehrschluss auch zum Schutz der Leitungen vor Umgebungseinwirkungen eingesetzt werden kann.

Weitere Einzelheiten, Vorteile und Merkmale der Erfindung lassen sich der nachfolgenden Erläuterung bevorzugter Ausführungsbeispiele anhand der beigefügten Zeichnungen entnehmen. Hierbei zeigen:
- FIG.1:: ein Prinzipschema einer erfindungsgemäßen Energieführungskette in Seitenansicht;
- FIG.2A-2D:: einen teilweise aufgebrochenen Abschnitt eines ersten Ausführungsbeispiels einer erfindungsgemäßen Energieführungskette in perspektivischer Ansicht (FIG.2A), in Seitenansicht (FIG.2B), im Querschnitt (FIG.2C) sowie in Detailvergrößerung (FIG.2D) ;
- FIG.3A-3D:: einen teilweise aufgebrochenen Abschnitt eines weiteren Ausführungsbeispiels einer erfindungsgemäßen Energieführungskette in Seitenansicht (FIG.3A), im Querschnitt (FIG.3C) sowie in Seiten- und perspektivischer Ansicht einer Halbschale eines Umhüllungssegments (FIG.3B bzw. FIG.3D);
- FIG.4A-4C:: einen teilweise aufgebrochenen Abschnitt einer weiteren Ausführung einer erfindungsgemäßen Energieführungskette in perspektivischer Ansicht (FIG.4A), in Seitenansicht (FIG.4B) und im Querschnitt (FIG.4C);
- FIG.5:: eine perspektivische Ansicht eines vierten Ausführungsbeispiels einer erfindungsgemäßen Energieführungskette;
- FIG.6A-6C:: ein erfindungsgemäßes Kettenglied für Umhüllungen mit rundem Querschnitt in perspektivischer Ansicht (FIG.6A), in Seitenansicht (FIG.6B) sowie im Querschnitt (FIG.6C);
- FIG.7A-7B:: einen Querschnitt und eine Seitenansicht einer weiteren, bevorzugten Ausführung einer erfindungsgemäßen Energieführungskette;
- FIG.8A-8C:: besonders bevorzugte Ausführungsformen einer Energieführungskette und von Anschlussflanschen für die Umhüllung, in Perspektiv- und Seitenansicht;
- FIG.9A-9B:: Längsschnitte zur Veranschaulichung des bevorzugten Verhältnisses von Teilung zu Wellenlänge eines Wellrohrs als Umhüllung.

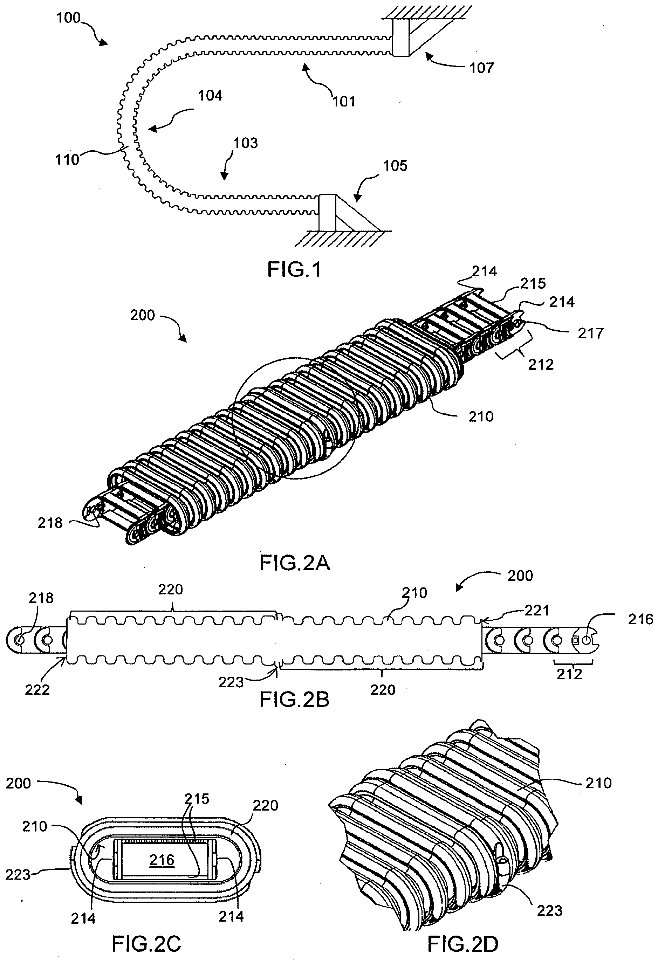

In FIG.1 ist eine schematisch gezeigte Energieführungskette allgemein mit Ziffer 100 bezeichnet. Die Energieführungskette 100 dient zur geschützten Führung von Kabeln, Schläuchen oder ähnlichen Leitungen, welche in den Abbildungen nicht näher gezeigt sind.

Zwischen einem Obertrum 101 und einem Untertrum 103 der Energieführungskette 100 ist in bekannter Weise ein Umlenkbereich 104 mit zum Vermeiden von Leitungsbrüchen fest vorgegebener Krümmung gebildet. Der Umlenkbereich 104 gewährleistet, dass die zulässigen Krümmungsradien der geführten Leitungen nicht unterschritten werden. Der Umlenkbereich 104 ist über eine Strecke relativ zum feststehenden Anschluss 105, beispielsweise am Untertrum 103 zusammen mit dem beweglichen Anschluss 107, beispielsweise am Obertrum 101 verfahrbar und folgt dementsprechend der Bewegung des beweglichen Anschlusses 107.

FIG.1 zeigt ferner schematisch aber als wesentlichen Aspekt der Erfindung eine biegsame, schlauchartige Umhüllung 110, welche die Kettenglieder (s. FIG.2-6) der Energieführungskette 100 in Umfangsrichtung und zwischen den beiden Anschlüssen 105, 107 durchgehend geschlossen umgibt. Ferner veranschaulicht FIG.1, dass die Umhüllung 110 von zumindest einigen Kettengliedern (s. FIG.2-6) getragen und mitgeführt wird. Wie weiter aus FIG.1 ersichtlich, ist die schlauchartige Umhüllung 110 ausreichend flexibel ausgeführt, beispielsweise durch geeignete Gestaltung und/oder Materialwahl, um die fest vorgegebene Krümmung des Umlenkbereichs 104 aufzunehmen und der Verfahrbewegung des Umlenkbereichs 104 möglichst widerstandslos zu folgen.

FIG.2A-2D zeigen teilweise einen Abschnitt einer Energieführungskette 200 gemäß einem ersten Ausführungsbeispiel. Die in FIG.2A-2D beispielhaft gezeigte Energieführungskette hat einen an sich bekannten Aufbau, in Bezug auf welchen beispielhaft auf die DE3531066 erwiesen wird. Die Kettenglieder 212 sind z.B. aus jeweils zwei Seitenteilen bzw. Seitenlaschen 214 und zwei diese Seitenlaschen 214 verbindenden Querstege 215 zusammengesetzt. Jedes Kettenglied 212 bildet hierbei, wie aus FIG.2C ersichtlich, zwischen den Seitenlaschen 214 und Querstegen 215 einen Innenraum, welcher als Aufnahme 216 zur Durchführung der Leitungen dient. Alternativ können bei nur jedem zweiten Kettenglied 212 Querstege 215 zur Verbindung der gegenüberliegenden parallelen Stränge aus Seitenlaschen 214 vorgesehen sein. Ferner ist unerheblich, ob die Querstege 215, wie etwa in DE 3531066 beschirieben, als separate Bauteile mit den Seitenlaschen 212 befestigt sind oder aber einer der Querstege 215 oder beide einstückig mit den Seitenlaschen 214 geformt sind.

Bis auf die Tatsache, dass die Kettenglieder 212 gelenkig mittels Gelenkbolzen 217 und entsprechend geformten Ausnehmungen 218 drehbar verbunden sein können, sind sonstige Ausführungsmerkmale und Eigenschaften der Kettenglieder 212 an sich vorliegend von untergeordneter Bedeutung und können in an sich bekannter gewählt sein.

Wie aus FIG.2A-2D ersichtlich, weist die Energieführungskette 200 erfindungsgemäß eine in Umfangs- und Längsrichtung hermetisch geschlossene schlauchartige Umhüllung 210 auf. Die Umhüllung 210 ist abschnittsweise aus einzelnen Segmenten 220 zusammengesetzt. Jedes Segment 220 ist hierbei gemäß FIG.2A-2D in Umfangsrichtung einstückig hergestellt und vollumfänglich geschlossen, wie aus FIG.2C ersichtlich. Jedes Segment 220 ist wellschlauchartig gestaltet. Zur hermetisch dichten Verbindung zwei in Längsrichtung benachbarter Segmente 220 ist jedes Segment 220 mit den gegenüberliegenden Stirnenden 221 bzw. 222 so geformt sind, dass diese formschlüssig ineinander greifen. Wie aus FIG.2B am besten ersichtlich, kann dies erzielt werden, indem die Lage der Stirnenden 221, 222 entsprechend in Bezug auf die wellenförmige Kontur gewählt wird. Zur Sicherung in Längs- und Umfangsrichtung weist die Umhüllung 210 jeweils zwischen zwei benachbarten Segmenten 220 eine geeignet geformte Spannschelle 223 auf. Diese Spannschelle 223 dient als zusätzliches Verbindungsteil und umgibt verbundene Segmente 220, wie in FIG.2D gezeigt, im Bereich der Stirnenden 221, 222 in Umfangsrichtung und hält diese kraftschlüssig zusammen.

Zur Bildung einer durchgehenden Umhüllung 210 um die Kettenglieder 212 nach dem Prinzip von FIG.1 sind die Segmente 220 aus geeignetem, elastischen Kunststoff hergestellt. Im Beispiel gemäß FIG.2A-2D können die Segmente 220 jeweils einstückig hergestellt sein. Im Querschnitt gemäß FIG.2C sind die Segmente jeweils oval und liegen mit geringem Spiel an den Querstegen 215 an, wobei zu den Seitenlaschen 214 ein größeres Spiel vorliegen kann. Folglich kann ohne Austritt von Abrieb ein an sich bekannter Aufbau der Kettenglieder 212, insbesondere mit Gelenkverbindungen aus Gelenkbolzen 217 und Ausnehmungen 218 verwendet werden.

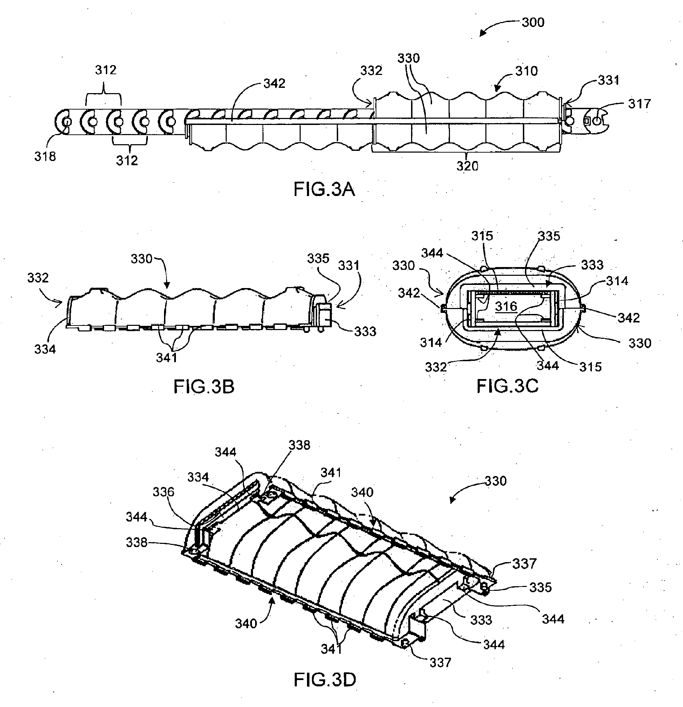

Eine weitere Energieführungskette 300 ist abschnittsweise und teilweise aufgebrochen in FIG.3A-3D veranschaulicht. Die Energieführungskette 300 unterscheidet sich vom zuvor beschriebenen Beispiel nach FIG.2A-2D lediglich im Aufbau der Umhüllung 310. Aufbau und Wirkweise der Kettenglieder 312 sind an sich bekannt und entsprechen z.B. der vorhergehenden Beschreibung. Bekannte Teile der Kettenglieder 312 sind mit um hundert erhöhten Bezugszeichen in FIG.3A und FIG.3C veranschaulicht.

Die Umhüllung 310 der Energieführungskette 300 nach FIG.3A-3D ist aus einer Vielzahl identisch geformter Halbschalen 330 zusammengesetzt. Jeweils zwei in Querrichtung gegenüberliegende Halbschalen 330 bilden hierbei ein Segment 320 der Umhüllung 310 in Längsrichtung der Energieführungskette 300. Die Stirnenden 331, 332 der Halbschalen 330 weisen jeweils zwei unterschiedliche, zusammenwirkend geformte Haltebügel 333, 334 auf. Hierbei hat einer der Haltebügel 333 eine stirnseitige Rastleiste 335 mittels welcher dieser in eine kongruent geformte Rastnut 336 des zusammenwirkenden, gegenüberliegenden Haltebügels 334 rastend eingreift. Der eine Haltebügel 333 weist ferner zumindest an jeder Längsseite Rastnocken 337 auf, welche in entsprechend geformte Aussparungen 338 des zusammenwirkenden Haltebügels 334 eingreifen. Die Rastnocken 337 und Aussparungen 338 sind Bestandteil einer mechanischen Verbindung zur Befestigung von zwei in Querrichtung gegenüberliegenden Halbschalen 330. Zur durchgehenden Befestigung in Querrichtung der gegenüberliegenden Halbschalen 330 weist jede Halbschale 330 ferner an den entlang der Längsrichtung der Energieführungskette 300 verlaufenden Längsseiten eine Verzahnung 340 auf. Die Verzahnungen 340 zweier gegenüberliegender Halbschalen 330 greifen im zusammengefügten Zustand ineinander. Einzelne Vorsprünge 341 der Verzahnung 340 stehen hierbei in seitlicher Richtung bzw. quer zur Längsrichtung hervor, wie am besten aus FIG.3C ersichtlich. Auf diese Vorsprünge 341 ist, wie in FIG.3A gezeigt, eine in Krümmungsrichtung der Kettenglieder 312 biegsame Klemmleiste 342 angebracht, so dass die Halbschalen 330 auch im Umlenkbereich 304 fest miteinander verbunden bleiben. Zur zusätzlichen Verbindung der Halbschalen 330 mit vereinzelten Kettengliedern 312 sind an den Haltebügeln 333, 334 weiterhin Rasthaken 344 vorgesehen, welche den Quersteg 315 im Bereich des entsprechenden Stirnendes 331, 332 hintergreifen. Die Halbschalen 330 sind so dimensioniert, dass die Vorsprünge 341 und somit auch die Klemmleisten 342 beidseitig auf Höhe der neutralen Faserschicht der zu umhüllenden Kettenglieder 314 zu liegen kommen.

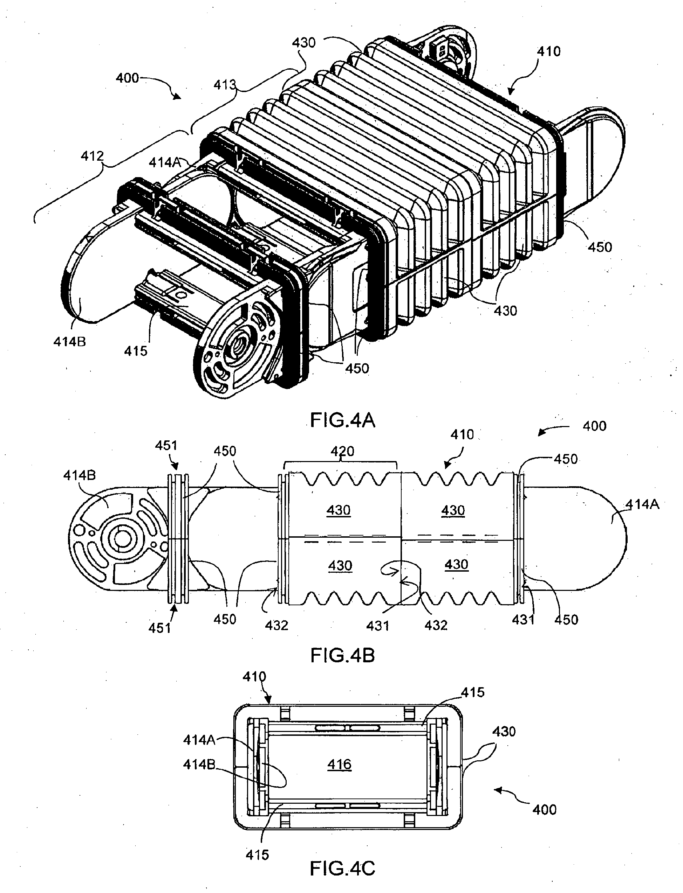

FIG.4A-4C zeigen ein drittes, bevorzugtes Ausführungsbeispiel einer erfindungsgemäßen Energieführungskette 400 in abschnittsweiser und unvollständiger Darstellung. In diesem Beispiel ist der Aufbau der einzelnen Kettenglieder 412, 413 wiederum an sich bekannt, entspricht hierbei jedoch in den Grundzügen einer Ausführung gemäß WO95/04231 mit unterschiedlichen Innen- und Außenlaschen. Auch bei diesen Kettengliedern 412, 413 bilden Seitenbereiche bzw. Seitenlaschen 414A, 414B parallele Laschenstränge, welche durch Querstege 415 verbunden sind und einen freien Innenraum als Aufnahme 416 der zu führenden Leitungen bilden.

Die Energieführungskette 400 gemäß FIG.4A-4C unterscheidet sich jedoch wiederum vor allem durch die Gestaltung der Umhüllung 410. In Längsrichtung ist die Umhüllung 410 hierbei aus verhältnismäßig kurzen Längsabschnitten bzw. Segmenten 420 zusammengesetzt. Jedes Segment 420 besteht hierbei aus zwei entsprechend kurz erstreckten Halbschalen 430, welche zwei benachbarte Kettenglieder 412, 413 in Umfangsrichtung umgeben sowie aus zwei zusammengefügten Verbindungsteilen 450. Die Verbindungsteile 450 umschließen das entsprechende Kettenglied 412 bzw. 413 als rahmenartige Halterungen. Jedes Verbindungsteil 450 weist passend zu jedem Stirnende 431, 432 jeweils eine entsprechende Haltenut 451 auf, in welche das Stirnende 431, 432 einer Halbschale 430 formschlüssig eingreift und einrastet. Jedes rahmenartige Verbindungsteil 450 umfasst in der Ausführung nach FIG.4A-4C zudem jeweils den typischen Quersteg 415 zur Verbindung der gegenüberliegenden Laschen 414A bzw. 414B. Entsprechend können die Verbindungsteile 450 an den üblicherweise für Querstege vorgesehenen Befestigungen der Seitenlaschen 414A, 414B befestigt werden. Entsprechend dem Längsabstand zwischen den Querstegen 415 beträgt bei der Energieführungskette 400 die Ausdehnung eines Segments 420 der Umhüllung 410 in Längsrichtung jeweils etwas die halbe Länge eines Kettenglieds 412, 413. Bei Querstegen lediglich zwischen jedem zweiten Laschenpaar verdoppelt sich die Länge der Segment 420. Breite und Höhe der Segmente 420 bzw. Halbschalen 430 entsprechen bis auf die Außenabmessung der Verbindungsteile 450 im Wesentlichen dem Querschnitt der Kettenglieder 412, 413, wie aus FIG.4C ersichtlich. Die Längsseiten der Halbschalen 430 liegen etwa auf Höhe der neutralen Faserschicht und können formschlüssig oder auf sonstige geeignete Weise miteinander verbunden sein. Aufgrund der kurzen Länge der Halbschalen 430 ist hier keine besonders starke Verbindung erforderlich.

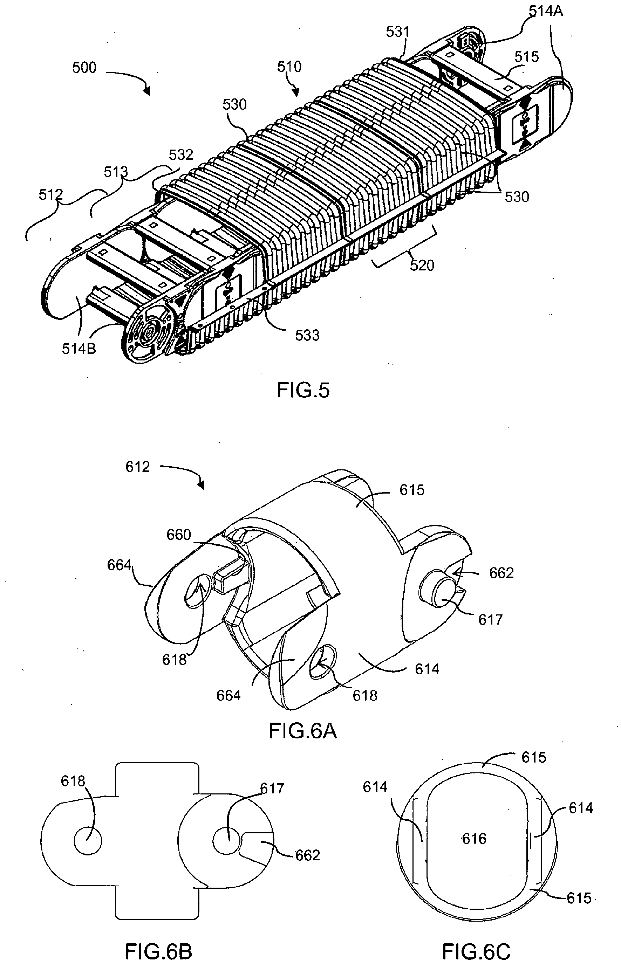

FIG.5 zeigt eine Energieführungskette 500 gemäß einem weiteren Ausführungsbeispiel. Die einzelnen Kettenglieder sind hierbei wiederum gemäß WO95/04231 aufgebaut und entsprechen bis auf die Gestaltung der Querstege 515 zwischen den Seitenlaschen 514A, 514B den Kettengliedern 412, 413 aus FIG.4A-4C. Die Umhüllung 510 gemäß FIG.5 ist jedoch vereinfacht ausgebaut und kommt ohne Verbindungsteile, Schraubklemmen und Klemmleisten aus. Bei der Umhüllung 510 gemäß FIG.5 besteht jedes Segment 520 jeweils abschließend aus zwei Halbschalen 530.

Jedes Segment 520 bzw. jede Halbschale 530 erstreckt sich in Längsrichtung über die Ausdehnung etwa eines Kettenglieds 512, 513. In Längsrichtung benachbarte Halbschalen 530 greifen unmittelbar mit ihren Stirnseiten 531, 532 formschlüssig ineinander. Die in Querrichtung gegenüberliegenden Längsseiten der Halbschalen 530 weisen an beiden Seiten jeweils hervorstehende Leisten 533 auf, welche mit spiegelsymmetrisch angeordneten mechanischen Verbindern, beispielsweise Rastnocken auf der einen Seite und entsprechenden Aussparungen auf der gegenüberliegenden Seite, versehen sind. Bei geeigneter Materialwahl der Halbschalen 530 wird somit eine relativ einfache, modulare Bauweise ermöglicht, welche, wie in FIG.3A-3D und FIG.4A-4C den wahlweisen Zugriff auf Kettenglieder 512, 513 und darin befindliche Leitungen ermöglicht und abschnittsweise Reparaturen vereinfacht.

Wie bei den Ausführungsbeispielen FIG.3A-3D und FIG.4A-4C liegt auch bei der Energieführungskette 500 die Längsfuge zwischen den Halbschalen 530 beidseitig etwa auf Höhe der neutralen Faserschicht welche durch die verwendeten Kettenglieder 512, 513 vorgeben wird, in FIG.5 etwa mittig zwischen den Schmalseiten der Seitenlaschen 514A, 514B.

FIG.6A-6C zeigen ein speziell zur Kapselung durch eine Umhüllung mit rundem Querschnitt geeignetes Kettenglied 612. Das Kettenglied 612 besteht aus einem Gliedkörper, welcher in einem Stück aus Kunststoff mittels Spritzguss-Verfahren hergestellt ist. Das Kettenglied 612 besteht somit lediglich aus einem einzigen Bauteil und hat zwei durch bogenförmig Querstege 615 einstückig verbundene Seitenbereiche 614.

Zumindest der mittlere Abschnitt der Seitenbereiche 614 bildet zusammen mit den Querstegen 615 einen im Wesentlichen kreisrunden Außenquerschnitt, wie am besten aus FIG.6C ersichtlich. In Längsrichtung sind an den gegenüberliegenden Enden der Seitenbereiche 614 jeweils Gelenkbolzen 617 und entsprechende Ausnehmungen 618 vorgesehen, um zwischen zwei benachbarten Kettengliedern 612 eine Gelenkverbindung zu erzielen. In bekannter Weise wirken innere Vorsprünge 660 mit entsprechend geformten Aussparungen 662 im Kettenglied 612 wie Anschläge zur Begrenzung der Schwenkbewegung zusammen. Die laschenartigen Seitenbereiche 614 des einstückigen Kettenglieds 612 sind beispielsweise durch geeignete Verjüngung 664 so geformt, dass diese durch Spreizen aufeinander gesteckt werden können.

Wie am besten aus FIG.6C ersichtlich, wird mit dieser Bauweise ein Querschnitt erzielt, welcher besonders für die Verwendung von schlauchartigen, insbesondere wellschlauchartigen Umhüllungen mit rundem Querschnitt geeignet ist. Hierdurch können geeignete Umhüllungen mit bereits bekannten Herstellungsverfahren, ähnlich denen zur Herstellung typischer Wellschläuche, kostengünstig bereitgestellt werden.

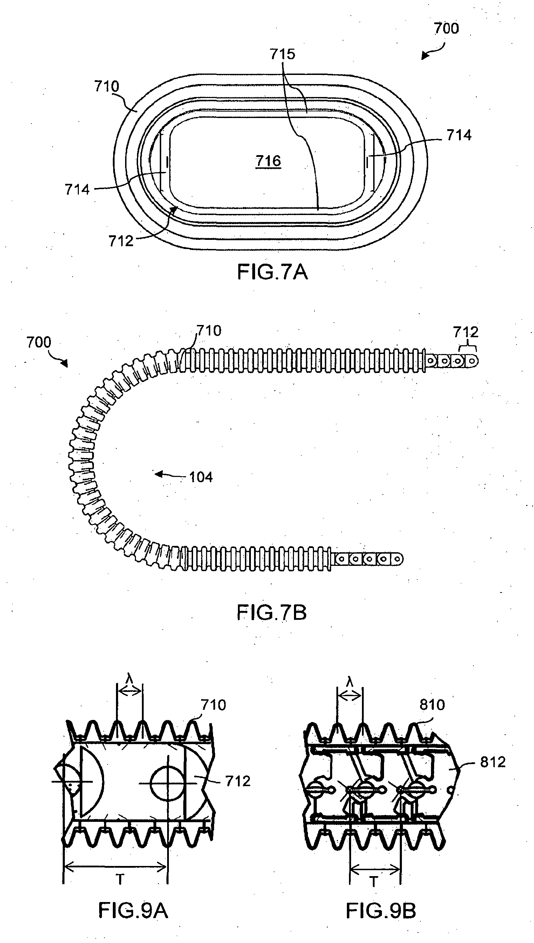

In FIG.7A-7B ist eine weitere Ausführung einer Energieführungskette 700 gezeigt, wobei nachfolgend lediglich Unterschiede zu den vorhergehenden Ausführungen erläutert werden. Die Umhüllung 710 gemäß FIG.7A-7B hat einen Querschnitt entsprechend dem in FIG.2C ist jedoch in Längsrichtung durchgehend, d.h. ohne Unterbrechung oder Segmentierung und Verbindungsteile zwischen beiden Anschlüssen 105, 107 einstückig ausgeführt, wie aus FIG.7B schematisch hervorgeht. Die Kettenglieder, 712 können analog zu FIG.6A-6C einstückig, jedoch gemäß FIG.7A mit ovalem, ellipsenförmigen oder rechteckig gerundetem Querschnitt hergestellt sein. Die Kettenglieder 712 können alternativ auch in bekannter Weise aus Einzelteilen zusammengesetzt sein. Letztere Variante lässt sich durch Abänderung bewährter Bauformen (s. FIG.2A-2D, 3A-3D) insbesondere der Seitenlaschen auf einen ovalen bzw. rechteckig gerundeten Querschnitt herstellen. Die Ausführung nach FIG. 7A-7B ermöglicht einen Kompromiss zwischen kostengünstiger und zuverlässiger Ausführung der Umhüllung 710 sowie minimale Abweichung von bewährten Gestaltungen der Kettenglieder. Ein Vorteil des abgerundeten Querschnitts der Kettenglieder 712 liegt in der verbesserten Mitführung der Umhüllung 710, insbesondere im Umlenkbereich 104.

Zum hermetischen bzw. staubdichten Abschluss der Umhüllungen 110... 810 am feststehenden Anschluss 105 und am beweglichen Anschluss 107 der Energieführungskette ist jeweils auch ein geeignet gestalteter Anschlussflansch an den offenen Enden der Umhüllung vorgesehen. Mit dieser Ergänzung vermeiden die Umhüllungen 110... 810 auf zuverlässige Weise das Austreten von Abrieb und sonstigen Partikeln aus dem Bereich der Energieführungskette in die Umgebung.

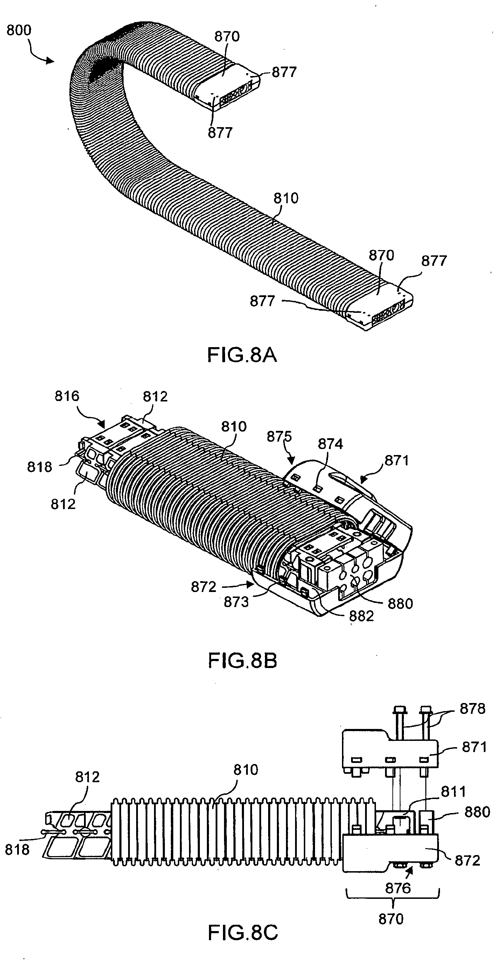

FIG.8A-8C zeigen eine bevorzugte Ausführung geeigneter Anschlussflansche und eine weitere, besonders bevorzugte Ausführung einer Energieführungskette 800 zur Verwendung in einem Reinraum.

Die Energieführungskette 800 hat eine wellschlauchartige Umhüllung 810, welche wie im Beispiel aus FIG.7A-7B, über die gesamte Länge einstückig hergestellt ist, wie aus FIG.8A ersichtlich. Die Umhüllung 810 ist als Wellrohr mit paralleler Wellung und langlochförmigem Querschnitt aus Polyamid, z.B. durch Extrusion gefertigt.

FIG.8B-8C zeigen jeweils in Explosionsansicht lediglich einen Teil der Umhüllung 810 bzw. der Energieführungskette 800, nämlich einen der beiden analog ausgeführten Endbereiche, welche jeweils einen identisch ausgeführten Anschlussflansch 870 aufweisen. Die Anschlussflansche 870 dienen zugleich dem staubdichten Abschluss der offenen Enden der Umhüllung 810 und deren Befestigung an Anschlusselementen 811, welche Endglieder an der Kette aus den Kettengliedern 812 bilden und in an sich bekannter Weise zur Befestigung an den Anschlüssen 105, 107 ausgeführt sind.

Zum Abdichten und Befestigen ist jeder Anschlussflansch 870 aus zwei zusammenwirkenden Klemmschalen 871, 872 zusammengesetzt, welche als staubdicht verbindbare, deckelartige Spritzguss-Formteile gestaltet sind. Die Klemmschalen 871, 872 sind durch Schnapphaken 873 und Aussparungen 874 miteinander verrastbar. Die geschlossenen Klemmschalen 871, 872 halten an einem vorderen Endbereich 875 kraft- und/oder formschlüssig, insbesondere formschlüssig durch Eingriff in ein oder mehrere Wellentäler die Umhüllung 810 in Längsrichtung fest und dichten die Umhüllung 810 umfänglich staubdicht ab, ggf. mittels einer nicht gezeigten zusätzlichen Dichtung.

Wie FIG.8A und FIG.8C zeigen sind an beiden Klemmschalen 871, 872 sind zur Befestigung, passend zu Schraubhülsen in den Anschlusselementen 811, Durchgangsöffnungen 877 für Verbindungsschrauben 878 vorgesehen. Die vorderen Durchgangsöffnungen 877 dienen zur Schraubverbindung mit den Anschlusselementen 811. Im hinteren Endbereich 876 sind weitere Durchgangsöffnungen 877 für Verbindungsschrauben 878 vorgesehen, mit welchen eine Durchführdichtung 880 zur staubdichten Durchführung der Kabel, Schläuche usw. geklemmt wird. Durch diese Gestaltung der Klemmschalen 871, 872 kann in einem Arbeitsschritt die Abdichtung der Umhüllung 810, das Sichern der Umhüllung an den Anschlusselementen 811 und das Befestigen der Enden der Energieführungskette 800 an den Anschlüssen 105, 107 (cf. FIG.1) erfolgen. Die separate Durchführdichtung 880 in jedem Anschlussflansch 870 ist kompressibel und mit Aussparungen für die Leitungen.versehen. Die Durchführdichtung 880 kann z.B. als einstückiger Polyurethan-Block oder als mehrlagiger Neoprenstapel ausgeführt sein. Im hinteren Endbereich.der Klemmschalen 871, 872 ist jeweils eine innenliegende Halterung 882 für die Anschlusselemente 811 und für die Durchführdichtung 880 vorgesehen.

FIG.8B-8C zeigen ferner eine Leitungsführung gemäß WO 02/086349A1, welche für Reinraumanwendungen bevorzugt mit einer Umhüllung 810 in Form eines Wellrohrs kombiniert wird. Hierbei sind die Kettenglieder 812 jeweils durch elastisch biegsame Gelenkelemente 818 schwenkbar miteinander verbunden. Solche Leitungsführungen haben den zusätzlichen Vorteil, offenbar durch das günstige Laufverhalten bedingt, möglichen Abrieb zwischen den Kettengliedern 812 und der Umhüllung 810 weitestgehend zu verringern und erzielen trotz der zusätzlichen Umhüllung 810 ein gute Laufruhe.

FIG.9A-9B veranschaulichen das bevorzugte Verhältnis der Teilung T der innenliegenden Leitungsführung aus Kettengliedern 712, 812 gemäß FIG.7A-7C bzw. FIG.8A-8C, zur Wellenlänge λ einer als Wellrohr ausgeführten Umhüllung 710 bzw. 810. Bevorzugt ist das Wellrohr so gestaltet, dass ein Verhältnis T/λ ≥ 2, vorzugsweise T/λ >> 2, erfüllt ist insgesamt ein günstiges Laufverhalten, Dauerbeständigkeit und eine gute Flexibilität zu erzielen.

### Energieführungskette insbesondere für Reinraumanwendungen Bezugzeichenliste

FIG.1:
- 100: Energieführungskette
- 101: Obertrum
- 103: Untertrum
- 104: Umlenkbereich
- 105: feststehender Anschluss
- 107: beweglicher Anschluss
- 110: schlauchartige Umhüllung

FIG.2A-2D:
- 200: Energieführungskette
- 210: Umhüllung
- 212: Kettenglieder
- 214: Seitenlaschen
- 215: Querstege
- 216: Aufnahme
- 217: Gelenkbolzen
- 218: Ausnehmung
- 220: Segmente
- 221: Stirnende
- 222: Stirnende
- 223: Spannschelle

FIG.3A-3D:
- 300: Energieführungskette
- 304: Umlenkbereich
- 310: Umhüllung
- 312: Kettenglieder
- 315: Quersteg
- 320: Segment
- 330: Halbschale
- 331: Stirnende
- 332: Stirnende
- 333: Haltebügel
- 334: Haltebügel
- 335: Rastleiste
- 336: Rastnut
- 337: Rastnocken
- 338: Aussparungen
- 340: Verzahnung
- 341: Vorsprünge
- 342: Klemmleiste
- 344: Rasthaken

FIG.4A-4C:
- 400: Energieführungskette
- 410: Umhüllung
- 412: Kettenglied
- 413: Kettenglied
- 414A,414B: Seitenlaschen
- 415': Quersteg
- 416: Aufnahme
- 420: Segment
- 430: Halbschale
- 431: Stirnende
- 432: Stirnende
- 450: Verbindungsteil
- 451: Haltenut

FIG.5:
- 500: Energieführungskette
- 510: Umhüllung
- 512: Kettenglied
- 513: Kettenglied
- 514A,514B: Seitenlaschen
- 515: Quersteg
- 520: Segment
- 530: Halbschale
- 533: Leisten

FIG.6A-6C:
- 612: Kettenglied
- 614: Seitenbereich
- 615: Quersteg
- 617: Gelenkbolzen
- 618: Ausnehmung
- 660: Vorsprünge
- 662: Aussparung
- 664: Verjüngung

FIG.7A-7B
- 700: Energieführungskette
- 710: Umhüllung
- 712: Kettenglied
- 714: Seitenbereich
- 715: Quersteg
- 716: Aufnahme

FIG.8A-8C
- 800: Energieführungskette
- 810: Umhüllung (Wellrohr)
- 811: Anschlusselement
- 812: Kettenglied
- 816: Aufnahme
- 818: Gelenkelement
- 870: Anschlussflansch
- 871, 872: Klemmschale
- 873: Schnapphaken
- 874: Aussparung
- 875: vorderer Endbereich
- 876: hinterer Endbereich
- 877: Durchgangsöffnungen
- 878: Verbindungsschrauben
- 880: Durchführdichtung
- 882: Halterung

FIG.9A-9B
- 710/810: Umhüllung (Wellrohr)
- 712, 812: Kettenglied
- 818: Gelenkelement
- T: Teilung
- λ: Wellenlänge

## Patentansprüche

1. Energieführungskette (100; 200... 700) zur Führung von mehreren Leitungen, wie Kabeln, Schläuchen oder dergleichen, insbesondere in einer Reinraumanwendung, umfassend eine Anzahl gelenkig miteinander verbundener Kettenglieder (212; 312... 812), wobei zumindest einige Kettenglieder eine Aufnahme (216; 316... 816) zur Durchführung der Kabel, Schläuche oder dergleichen aufweisen und wobei benachbarte Kettenglieder jeweils mittels Gelenkverbindung so gegeneinander schwenkbar sind, dass zwischen einem feststehenden Anschluss (105) und einem beweglichen Anschluss (107) der Energieführungskette ein verfahrbarer Umlenkbereich (104) mit vorgegebener Krümmung gebildet wird; **dadurch gekennzeichnet, dass**
eine biegsame wellschlauchartige Umhüllung (210... 810) die Kettenglieder in Umfangsrichtung und zwischen beiden Anschlüssen (105, 107) durchgehend geschlossen umgibt und als Kapselung gegen Austreten von Abrieb wirkt, wobei die Umhüllung von zumindest einigen Kettengliedern (212; 312... 812) getragen und mitgeführt wird und dass das Material der wellschlauchartigen Umhüllung elastisch und ausreichend flexibel ist, um die vorgegebene Krümmung des Umlenkbereichs (104) aufzunehmen und dessen Verfahrbewegung zu folgen.

2. Energieführungskette nach Anspruch 1, **dadurch gekennzeichnet, dass** die Umhüllung (710; 810) in Längsrichtung zwischen beiden Anschlüssen (105, 107) durchgehend einstückig hergestellt ist, vorzugsweise aus Kunststoff.

3. Energieführungskette nach Anspruch 2, **dadurch gekennzeichnet, dass** die Umhüllung als Wellrohr (710; 810) ausgeführt ist und eine Wellenlänge λ aufweist, welche im Verhältnis zur Teilung T der verbundenen Kettenglieder (712, 812) T/λ ≥ 2 erfüllt.

4. Energieführungskette nach Anspruch 1, 2 oder 3, **dadurch gekennzeichnet, dass** am feststehenden Anschluss (105) und am beweglichen Anschluss (107) jeweils ein Anschlussflansch (870) zum staubdichten Abschluss der offenen Enden der Umhüllung vorgesehen ist.

5. Energieführungskette nach Anspruch 4, **dadurch gekennzeichnet, dass** jeder Anschlussflansch (870) zwei staubdicht verbindbare Klemmschalen (871, 872) umfasst, welche an einem vorderen Endbereich (875) kraft- und/oder formschlüssig die Umhüllung (810) halten und diese staubdicht umgeben, und Befestigungsmittel (877) zur Befestigung, insbesondere zur Schraubverbindung mit Anschlusselementen für die Kettenglieder, aufweisen.

6. Energieführungskette nach Anspruch 4, **dadurch gekennzeichnet, dass** jeder Anschlussflansch (870) in einem hinteren Endbereich (876) eine Durchführdichtung (880) umfasst zur staubdichten Durchführung der Kabel, Schläuche oder dergleichen.

7. Energieführungskette nach einem der vorhergehenden Ansprüche, **dadurch gekennzeichnet,**
**dass** die wellschlauchartige Umhüllung (210; 310; 410; 510; 710; 810) einen im Wesentlichen ovalen, elliptischen oder gerundet rechteckigen Querschnitt quer zur Längsrichtung aufweist; und/oder
**dass** die Umhüllung (210; 310; 410; 510; 810) im Querschnitt an die Kettenglieder angepasst ist und diese sowohl in Umfangsrichtung als auch in Längsrichtung mit geringem oder minimalem Spiel umgibt.

8. Energieführungskette nach Anspruch 1, **dadurch gekennzeichnet, dass** die Umhüllung in Längsrichtung aus einer Mehrzahl modularer Segmente (220; 320; 420; 520) zusammengesetzt ist, welche jeweils in Umfangsrichtung geschlossen miteinander verbunden sind.

9. Energieführungskette nach Anspruch 8, **dadurch gekennzeichnet, dass** zumindest einige der modularen Segmente jeweils eine erste und eine zweite Halbschale (330; 430; 530) umfassen, welche ein oder mehrere Kettenglieder in Umfangsrichtung geschlossen umgeben und vorzugsweise mit Längsfugen auf Höhe der neutralen Faserschicht der Energieführungskette verbindbar sind, wobei die Halbschalen (330; 530) insbesondere identisch ausgeführt sind und spiegelsymmetrisch angeordnete mechanische Verbinder (337, 338; 533) aufweisen, um zwei Halbschalen miteinander zu verbinden.

10. Energieführungskette nach Anspruch 9, **dadurch gekennzeichnet, dass** die Halbschalen (330) im Bereich der Längsfugen Vorsprünge (341) aufweisen und mittels Klemmleisten (342) gesichert sind, wobei vorzugsweise an jeder Halbschale zur Seite der Längsfuge eine Verzahnung (340) vorgesehen ist, welche in eine entsprechende Verzahnung der gegenüberliegenden Halbschale eingreift.

11. Energieführungskette nach einem der Ansprüche 8 bis 10, **dadurch gekennzeichnet, dass** benachbarte Segmente stirnseitig mittels zusätzlichen Verbindungsteilen in Umfangsrichtung geschlossen miteinander verbunden sind, wobei gegenüberliegende Stirnseiten (221, 222; 331, 332; 431, 432; 531, 532) der Segmente vorzugsweise so ausgeführt sind, dass diese jeweils
formschlüssig ineinandergreifen und vorzugsweise von einem umlaufenden, kraftschlüssigen Verbindungsteil (223), insbesondere einer Spannschelle, gehalten sind; oder form- und/oder kraftschlüssig mit einem zwischengeordneten Verbindungsteil (333, 334; 450) verbunden sind.

12. Energieführungskette nach Anspruch 11, **dadurch gekennzeichnet, dass** rahmenartige Halterungen (450) als Verbindungsteile zur Verbindung einzelner Segmente der Umhüllung miteinander und/oder zur Halterung der Umhüllung an einzelnen Kettengliedern vorgesehen sind und die Halterungen (450) vorzugsweise an den Querstegen (415) einzelner Kettenglieder als separate Bauteile angebracht sind oder zur Bildung solcher Querstege mit den Seitenbereichen der Kettenglieder (414A, 414B3) verbunden sind.

13. Verwendung einer Energieführungskette (100; 200... 800) nach einem der vorhergehenden Ansprüche 1 bis 12 zur Führung von Kabeln, Schläuchen oder dergleichen in einer Reinraumanwendung.

14. Umhüllung für eine Leitungsführung (100; 200... 800) zur gekapselten Führung von Kabeln, Schläuchen oder dergleichen in einer Reinraumanwendung, wobei die Umhüllung (110; 210... 810) schlauchartig ausgeführt ist, um die Leitungsführung in Umfangsrichtung und zwischen zwei relativbeweglichen Anschlüssen (105, 107) durchgehend geschlossen zu umgeben, sowie biegsam ausgeführt ist, um die vorgegebene Krümmung eines Umlenkbereichs (104) der Leitungsführung aufzunehmen und deren Verfahrbewegung zu folgen;
wobei die Umhüllung in Längsrichtung aus einer Mehrzahl modularer Segmente (220; 320; 420; 520) zusammengesetzt ist, welche jeweils in Umfangsrichtung geschlossen miteinander verbünden sind und zumindest einige der modularen Segmente jeweils eine erste und eine zweite Halbschale (330; 430; 530) umfassen, um einen Abschnitt der Leitungsführung in Umfangsrichtung geschlossen zu umgeben und als Kapselung gegen Austreten von Abrieb zu wirken, und dadurch gekenntzeichnet, dass das Material aus dem die Halbschalen (330; 430; 530) hergestellt sind elastisch und ausreichend flexibel ist, um die vorgegebene Krümmung des Umlenkbereichs (104) aufzunehmen und dessen Verfahrbewegung zu folgen.

15. Umhüllung nach Anspruch 14, **dadurch gekennzeichnet, dass** die Halbschalen (330; 430; 530) mit Längsfugen auf Höhe der neutralen Faserschicht der Leitungsführung verbindbar sind.

16. Umhüllung nach Anspruch 15, **dadurch gekennzeichnet, dass** die Halbschalen (330; 530) identisch ausgeführt sind und spiegelsymmetrisch angeordnete mechanische Verbinder (337, 338; 533) aufweisen, um zwei Halbschalen miteinander zu verbinden.

17. Umhüllung nach Anspruch 14, **dadurch gekennzeichnet, dass** die gegenüberliegenden Stirnseiten der Segmente formschlüssig ineinander greifen.

## Claims

1. Energy chain (100; 200,... 700) for guiding several lines such as cables, hoses or the like, in particular in a clean room application, comprising a number of chain links (212; 312,... 812) articulated to each other, wherein at least some chain links present a housing (216; 316,... 816) for the passage of said cables, hoses or the like, and wherein adjacent chain links can be pivoted against each other by means of a hinged connection in such a manner that a movable deflection zone (104) having a predetermined curvature is formed between a fixed connection (105) and a movable connection (107) of the energy chain; **characterized in that**
a bendable tubular envelope (210;... 810), which has a corrugated hose-like configuration, circumferentially surrounds the chain links between said two connections (105, 107) in a continuous closed manner and serving as a containment to prevent release of abrasion particles, wherein the envelope is supported and entrained by at least some chain links and that the material of the corrugated hose-like envelope is elastic and sufficiently flexible for absorbing said predetermined curvature of the deflection zone (104) and for following the movement thereof.

2. Energy chain according to claim 1, **characterized in that** the envelope (710; 810) is formed in the longitudinal direction between both connections (105, 107) continuously as one piece and preferably from a synthetic material.

3. Energy chain according to claim 2, **characterized in that** the envelope is configured as a corrugated tube (710; 810) and has a wavelength λ which in relation to the pitch T of the interconnected chain links (712, 812) satisfies T/λ ≥ 2.

4. Energy chain according to claim 1, 2 or 3, **characterized in that** on the fixed connection (105) and on the movable connection (107) a respective connecting flange (870) for the dust-proof closure of the open ends of the envelope is provided.

5. Energy chain according to claim 4, **characterized in that** each connecting flange (870) comprises two clamp collars (871, 872), which can be connected to each other in a dust-proof manner and which in a front end portion (875) thereof by force-fit and/or positive-fit and surround the envelope (810) in a dust-proof manner, and fixing means (877) for fixation, in particular for a screw connection with connecting elements for the chain links.

6. Energy chain according to claim 4, **characterized in that** each connecting flange (870) includes in a rear portion (876) thereof a feed-through sealing gasket (880) for the dust-proof feed-through of the cables, hoses or the like.

7. Energy chain according to one of the preceding claims, **characterized in that**
the corrugated hose-like envelope (210; 310; 410; 510; 710; 810) has a substantially oval, elliptical or rounded rectangular cross-section transversely to the longitudinal direction; and/or **in that** the envelope (210; 310; 410; 510; 810) is adapted in its cross-section to the chain links and surrounds the same both in the circumferential direction and in the longitudinal direction with little or minimum play.

8. Energy chain according to claim 1, **characterized in that** in the longitudinal direction said envelope is assembled of a plurality of modular segments (220; 320; 420; 520) which are each connected to each other in a circumferentially closed manner.

9. Energy chain according to claim 8, **characterized in that** at least some of the modular segments respectively comprise a first and a second half-shell (330; 430; 530), which surround one or several chain links in a circumferentially closed manner and which can be connected preferably by longitudinal joints at the level of the neutral fiber layer of the energy chain, wherein said half-shells (330; 530) are particularly identically designed and present mechanical connectors (337, 338; 533) for interconnecting two half-shells.

10. Energy chain according to claim 9, **characterized in that** said half-shells (330) present protrusions (341) in the region of the longitudinal joints and are secured by means of clamping strips (342), wherein teeth (340) are preferably provided on each half-shell towards the side of said longitudinal joint, said teeth engaging with corresponding teeth on the opposing half-shell.

11. Energy chain according to one of the claims 8 to 10, **characterized in that** adjacent segments are frontally connected to each other in a circumferentially closed manner by means of additional connecting elements, wherein opposing front faces (221, 222; 331, 332; 431, 432; 531, 532) of the segments are preferably configured such that
the same respectively engage each other by positive-fit and are supported by a circumferential, force-fit connecting element (223), particularly a clip; or
are connected by force-fit and/or positive-fit to an interposed connecting element (333, 334; 450).

12. Energy chain according to claim 11, **characterized in that** the frame-like brackets (450) are provided for the connection of individual segments of the envelope to each other and/or for holding the envelope at individual chain links, wherein said brackets (450) are preferably attached as separate components to the crossbars (415) of individual chain links or are connected to the lateral regions of the chain links (414A, 414B3) for creating such crossbars.

13. Use of an energy chain (100; 200... 800) according to one of claims 1 to 12, for guiding cables, hoses or the like in a clean room application.

14. Envelope for a cable guide (100; 200,... 700) for encapsulated guiding of cables, hoses or the like, in a clean room application, wherein the envelope (110; 210... 810) has a tubular configuration in order to circumferentially surround the cable guide between two connections (105, 107), the connections being movable relative to each other, in a continuous closed manner and has a bendable configuration for absorbing a predefined curvature of the deflection zone (104) and following reciprocating movement thereof;
wherein the envelope is assembled in the longitudinal direction of a plurality of modular segments (220; 320; 420; 520), which are respectively connected to each other in a circumferentially closed manner, and wherein at least some of said modular segments respectively comprise a first half-shell and a second half-shell (330; 430; 530) for surrounding at least a section of the cable guide in a circumferentially closed manner and for serving as a containment to prevent release of abrasion particles, **characterized in that** the material of which said half-shells (330; 430; 530) are made is elastic and sufficiently flexible for absorbing a predefined curvature of the deflection zone (104) and following reciprocating movement thereof.

15. Envelope according to claim 14, **characterized in that** said half-shells (330; 430; 530) can be connected by longitudinal joints at the level of the neutral fiber layer of the cable guide.

16. Envelope according to claim 15, **characterized in that** said half-shells (330; 530) are identically designed and have mirror-symmetrically arranged mechanical connectors (337, 338; 533) for connecting two half-shells to each other.

17. Envelope according to claim 14, **characterized in that** the opposing front faces of the segments engage each other by positive fit.

## Revendications

1. Chaîne de guidage d'énergie (100; 200, ... 700) pour guider plusieurs lignes telles que des câbles, des flexibles ou similaires, en particulier dans une application de salle blanche, comprenant un certain nombre de maillons de chaîne (212; 312, ... 812) articulés l'un à l'autre, au moins certains maillons de chaîne présentant un logement (216; 316, ... 816) pour le passage desdits câbles, flexibles ou similaires, et dans lequel des maillons de chaîne adjacents peuvent être pivotés l'un par rapport à l'autre au moyen d'une liaison articulée de manière telle qu'une zone de rebroussement mobile (104) ayant une courbure prédéterminée est formée entre une connexion fixe (105) et une connexion mobile (107) de la chaîne de guidage d'énergie; **caractérisé en ce que**
une enveloppe tubulaire flexible (210; ... 810), qui présente une configuration du type tube ondulé, entoure de manière circonférentielle les maillons de chaîne entre lesdites deux connexions (105, 107) de manière fermée en continu et sert de confinement pour empêcher le dégagement de particules d'abrasion, dans lequel l'enveloppe est supportée et entraînée par au moins quelques maillons de chaîne et **en ce que** le matériau de l'enveloppe du type tube ondulé est élastique et suffisamment souple pour absorber ladite courbure prédéterminée de la zone de rebroussement (104) et pour suivre son mouvement.

2. Chaîne de guidage d'énergie selon la revendication 1, **caractérisée en ce que** l'enveloppe (710; 810) est formée, en direction longitudinale entre les deux connexions (105, 107), en continu d'une seule pièce et de préférence en une matière synthétique.

3. Chaîne de guidage d'énergie selon la revendication 2, **caractérisée en ce que** l'enveloppe est configurée comme tube ondulé (710; 810) et présente une longueur d'onde λ qui, par rapport au pas T des maillons de chaîne interconnectés (712, 812) satisfait la relation T / λ ≥ 2.

4. Chaîne de guidage d'énergie selon la revendication 1, 2 ou 3, **caractérisée en ce qu'**une bride de connexion (870) respective est fournie sur la connexion fixe (105) et sur la connexion mobile (107) pour la fermeture étanche aux poussières des extrémités ouvertes de l'enveloppe.

5. Chaîne de guidage d'énergie selon la revendication 4, **caractérisée en ce que** chaque bride de connexion (870) comprend deux colliers de serrage (871, 872) qui peuvent être reliés l'un à l'autre de manière étanche à la poussière et qui maintiennent, dans une partie d'extrémité avant (875), par liaison de force et / ou de forme, l'enveloppe (810) et l'entourent de manière étanche à la poussière, et des moyens de fixation (877) pour la fixation, en particulier pour une connexion par vis avec des éléments de connexion pour les maillons de chaîne.

6. Chaîne de guidage d'énergie selon la revendication 4, **caractérisée en ce que** chaque bride de connexion (870) comprend dans sa partie arrière (876) un joint d'étanchéité à passage (880) pour faire passer de manière étanche à la poussière lesdits câbles, flexibles ou similaires.

7. Chaîne de guidage d'énergie selon l'une des revendications précédentes, **caractérisée en ce que** l'enveloppe (210, 310, 410, 510, 710, 810) du type tube ondulé présente une section transversale sensiblement rectangulaire, ovale, elliptique ou arrondie, vue transversalement à la direction longitudinale; et/ou **en ce que**
l'enveloppe (210, 310, 410, 510, 810) est adaptée dans sa section transversale aux maillons de chaîne et entoure celle-ci à la fois dans la direction circonférentielle et dans la direction longitudinale avec peu ou avec un minimum de jeu.

8. Chaîne de guidage d'énergie selon la revendication 1, **caractérisée en ce que**, dans la direction longitudinale, ladite enveloppe est assemblée d'une pluralité de segments modulaires (220; 320; 420; 520) qui sont chacun reliés l'un à l'autre d'une manière circonférentiellement fermée.

9. Chaîne de guidage d'énergie selon la revendication 8, **caractérisée en ce qu'**au moins certains des segments modulaires comprennent respectivement une première demi-coque et une deuxième demi-coque (330, 430, 530) qui entourent un ou plusieurs maillons de chaîne d'une manière circonférentiellement fermée et qui peuvent être raccordés de préférence par des joints longitudinaux au niveau de la couche de fibre neutre de la chaîne de guidage d'énergie, dans lequel lesdites demi-coques (330; 530) sont conçues en particulier de manière identique et présentent des connecteurs mécaniques (337, 338; 533) pour interconnecter deux demi-coques.

10. Chaîne de guidage d'énergie selon la revendication 9, **caractérisée en ce que** lesdites demi-coques (330) présentent des protubérances (341) dans la zone des joints longitudinaux et sont fixées au moyen de bandes de serrage (342), un agencement de dents (340) étant de préférence prévu sur chaque demi-coque vers le côté dudit joint longitudinal, lesdites dents engrenant avec des dents correspondantes sur la demi-coque opposée.

11. Chaîne de guidage d'énergie selon l'une quelconque des revendications 8 à 10, **caractérisée en ce que** des segments adjacents sont reliés l'un à l'autre de façon à être reliés de façon frontale l'un à l'autre par des éléments de raccordement supplémentaires, des faces frontales opposées (221, 222, 331, 332; 431, 432, 531, 532) des segments étant de préférence configurés de sorte que
lesdits éléments s'accouplent l'un à l'autre par conjugaison de forme et sont supportés par un élément de raccordement circonférentiel (223), en particulier un clip; ou
sont reliés par liaison de force et / ou conjugaison de forme à un élément de raccordement interposé (333, 334, 450).

12. Chaîne de guidage d'énergie selon la revendication 11, **caractérisée en ce que** des supports (450) en forme de châssis sont prévus pour relier des segments individuels de l'enveloppe l'un à l'autre et/ou pour maintenir l'enveloppe sur des maillons de chaîne individuels, dans lequel lesdits supports (450) sont de préférence attachés en tant que composants séparés aux traverses (415) des maillons de chaîne individuels ou sont reliés aux régions latérales des maillons de chaîne (414A, 414B3) pour créer de telles traverses.

13. Utilisation d'une chaîne de guidage d'énergie (100; 200 ... 800) selon l'une des revendications 1 à 12, pour le guidage de câbles, flexibles ou similaires dans une application de salle blanche.

14. Enveloppe pour guide-câble (100; 200, ... 700) pour le guidage encapsulé de câbles, flexibles ou similaires, dans une application de salle blanche, dans lequel l'enveloppe (110; 210 ... 810) a une configuration tubulaire pour entourer circonférentiellement et de manière fermée en continue un guide-câble entre deux connexions (105, 107), les connexions étant mobiles l'une par rapport à l'autre, et l'enveloppe ayant une configuration pouvant être pliée pour absorber une courbure prédéfinie d'une zone de rebroussement (104) et suivre son mouvement de va-et-vient;
dans lequel l'enveloppe est assemblée dans la direction longitudinale d'une pluralité de segments modulaires (220; 320; 420; 520), qui sont respectivement reliés l'un à l'autre d'une manière circonférentiellement fermée, et dans lequel au moins certains desdits segments modulaires comprennent respectivement une première demi-coque et une deuxième demi-coque (330, 430, 530) pour entourer au moins une section du guide-câble de manière circonférentiellement fermée et pour servir de confinement pour empêcher la dégagement de particules d'abrasion, **caractérisée en ce que** la matière, dont desdites demi-coques (330, 430, 530) sont réalisées, est élastique et suffisamment souple pour absorber une courbure prédéfinie de la zone de rebroussement (104) et suivre son mouvement de va-et-vient.

15. Enveloppe selon la revendication 14, **caractérisée en ce que** lesdites demi-coques (330, 430, 530) peuvent être reliées par des joints longitudinaux au niveau de la couche de fibre neutre du guide-câble.

16. Enveloppe selon la revendication 15, **caractérisée en ce que** lesdites demi-coques (330; 530) sont conçues de manière identique et comportent des connecteurs mécaniques (337, 338; 533) symétriques disposés symétriquement pour relier deux demi-coques l'une à l'autre.

17. Enveloppe selon la revendication 14, **caractérisée en ce que** les faces frontales opposées des segments s'engagent mutuellement par conjugaison de forme.
